# EUROPEAN PATENT SPECIFICATION

(11) **EP 0 523 972 B1**
(45) Date of publication and mention of the grant of the patent: **19.03.1997**
(21) Application number: 92306469.5
(22) Date of filing: 15.07.1992
(51) Int. Cl.: F16D 7/02

(54) **Compact torque limiting clutch**
Kompakte, das Drehmoment begrenzende Kupplung
Embrayage limiteur de couple compact

(30) Priority: 18.07.1991 US 732096; 01.05.1992 US 877148
(43) Date of publication of application: 20.01.1993
(73) Proprietor: POWER TRANSMISSION TECHNOLOGY, INC., Sharon Center, Ohio 44274 (US)
(72) Inventor: Heidenreich, David C., Akron, Ohio 44313 (US); Nichols, Keith A., North Canton, Ohio 44720 (US)
(74) Representative: Spall, Christopher John

(56) References cited:
- DE-C- 572 168
- DE-U- 9 003 335
- FR-A- 2 251 746
- FR-A- 2 302 450
- GB-A- 1 262 643
- US-A- 3 092 983
- US-A- 3 612 238
- US-A- 3 775 998
- US-A- 4 661 083

## Description

### TECHNICAL FIELD

The invention herein resides in the art of torque limiting clutches of the friction type. More particularly, the invention relates to a compact torque limiting clutch adapted to interconnect input and output power sources through a friction media having a characteristic break-away torque.

### BACKGROUND ART

The use of torque limiting clutches to couple drive and driven members is well known. In industries requiring such torque limiting clutches, it is well known that the same are designed or selected for specific applications. Each torque limiting clutch typically has a characteristic break-away torque. By employing a torque limiting clutch with a break-away torque which is lower than that at which damage can be done to the drive or driven members, the torque limiting clutch serves to protect the system in which it is employed.

Previously, it has been know to use spring bolts, spring pins and/or spring cups in torque limiting clutches as a force generating means. Such spring bolt assemblies are shown in U.S. Patent 4,401,426, such spring pin assemblies are shown in U.S. Patent 4,645,472, and the spring cup assemblies of a similar nature are shown in Patent 4,661,083. It is now readily appreciated by those skilled in the art that such spring bolt assemblies, spring pin assemblies, and spring cup assemblies provide for ease of assembly of torque limiting clutches. They further significantly preclude tampering with the torque setting of the clutch, and provide substantially consistent characteristic break-away torque over the useful life of the clutch.

Despite the compact nature of the spring cups, spring pins, and spring bolts, torque limiting clutches are necessarily of substantial physical size, particularly length. The size results from the necessary inclusion of input and output coupling members, a pressure plate, spring or other force members, and the requisite number of friction elements. The physical size constraints placed on many systems otherwise requiring torque protection often preclude the implementation of torque limiting clutches therein.

An example of a torque limiting clutch is shown in the German Gebrauchsmuster specification 9003335.3. This discloses an input flange, an output hub, a pressure plate on the output hub, friction discs between the pressure plate and input flange and a keeper plate.

It is well known in the art that the size of many torque limiting clutches is often dictated by the assembly techniques employed in their manufacturer, such assembly requiring access areas to nuts, bolts, and the like during the assembly process. When such nuts and bolts are interior to the torque limiting clutch, access openings and clearances must be provided within the clutch to accommodate the assembly process. These areas and openings necessarily aggravate the size considerations given in the design of such torque limiters.

It is further known that the size of a torque limiting clutch is greatly impacted by the nature of the input and output hubs employed for the coupling of drive and driven members thereto. In many known torque limiting clutches, the axial size of the clutch, measured axially from one extreme to the other, has been found to be excessive.

Prior torque limiting clutches have generally failed to provide adequate heat dissipation in a compact unit, and have generally been ineffective in shielding the interior of the clutch from the environment. Such shielding is required to prevent contamination of the friction surfaces, and thereby provides for more accurate torque characteristics.

Additionally, the known prior art has generally not provided for the use of wear indicators to advise the operator when the friction material has been spent.

There is a need in the art for a compact torque limiting clutch of minimal axial dimensions and in which its assembly is easily achieved without the need of access to the internal structure of the assembly. There is a further need for such a torque limiting clutch which achieves effective heat dissipation and protection from the environment while assuring coaxial alignment of the input and output members. There is also the need for such a torque limiting clutch that employs a torque pin as a wear indicator.

### DISCLOSURE OF THE INVENTION

According to the invention in a torque limiting clutch comprising: an input flange; an output hub; a pressure plate received upon said output hub; a friction disc interposed between said pressure plate and said input flange; and a keeper plate received by said hub, said keeper plate fixedly securing said first friction disc to said output hub, a torque pin passes through said pressure plate and is threadedly received by said input flange, and a chamfered washer is being interposed between a shoulder of said torque pin and said input flange.

Thus a torque limiting clutch is provided which may be assembled and disassembled without internal access to the clutch. The clutch is also compact in design, being substantially flat and able to be constrained axially between pairs of planar surfaces. The input and output hubs may be nested within each other. The clutch is reliable and durable in construction and operation, while being conducive to implementation with state of the art apparatus and techniques.

An advantage of the chamfered washer is that the clamping area and torque pin strength are maximised.

The torque pin may have an arcuate surface between said shoulder and an axial body of said torque pin, the said chamfered washer having a chamfered surface in juxtaposition to said arcuate surface

The torque pin may be recessed until said first friction disc is spent. An advantage of this is that a means is provided for monitoring clutch wear.

The torque pin preferably passes through a separator plate interposed between said first friction disc and said pressure plate.

The separator plate may be extended to the full diameter of the clutch, heat dissipating shields extending therefrom. This arrangement increases the heat dissipation from the clutch.

The input flange may be received upon said keeper plate and a bearing interposed between said input flange and said keeper plate, said input flange, keeper plate, and bearing being coaxial.

Spring biasing means may be interposed between said input flange and said pressure plate for urging said pressure plate toward said input flange. The spring biasing means may comprise a spring and bolt assembly to provide a forceful frictional engagement between the output hub and the input flange. A means may be provided for engaging said bolt of said spring bolt assembly for preventing rotational movement of said bolt. The spring biasing means may pass through said separator plate.

First and second cup shaped annular shields may be positioned adjacent each other and between said pressure plate and first friction disc, said first cup shaped annular shield having side edges extending over said input flange and second cup shaped annular shield having side edges extending over said pressure plate. The shields protect the interior of the clutch from the environment. The shields may extend from the separator plate to the input flange and pressure plate. A seal may be interposed between said first and second cup shaped annular shields between said side edges thereof.

### DESCRIPTION OF DRAWINGS

For a complete understanding of the objects, techniques and structure of the invention reference should be made to the following detailed description and accompanying drawing wherein:

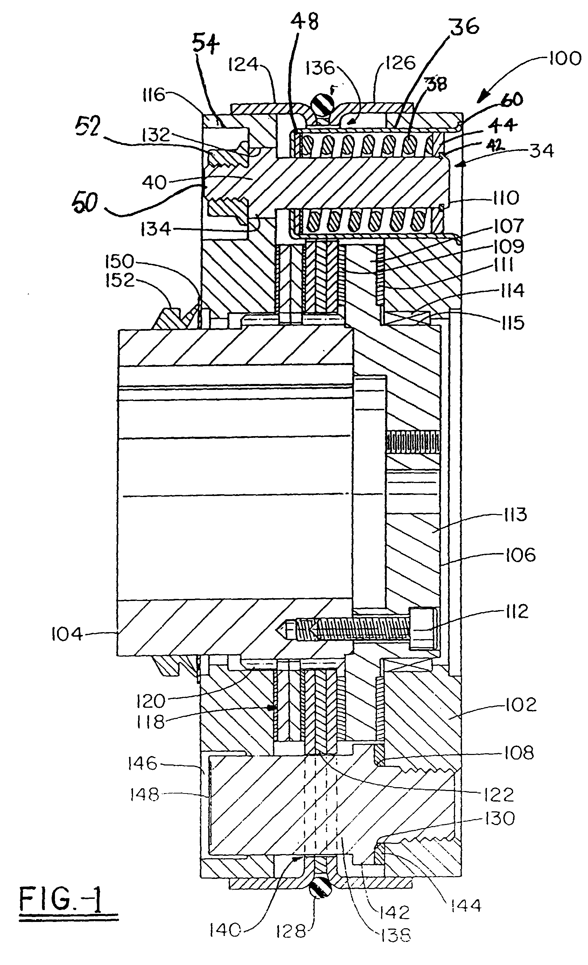

Fig. 1 is a cross sectional view of a compact torque limiting clutch according to a first embodiment of the invention;

### BEST MODE FOR CARRYING OUT THE INVENTION

Referring now to the drawings and more particularly Fig. 1, it can be seen that a torque limiting clutch according to a first embodiment of the invention is designated generally by the numeral 100. Here, an input flange 102, comprising an annular plate, is provided to receive a power input source such as a coupling, sprocket, pulley or the like. An output hub 104 is also provided to appropriately receive a shaft or the like to be driven. A friction disc 106 is fixed to the output hub 104 by means of bolts 112. The disc 106 includes an annular shoulder flange 107 having friction material 109, 111 bonded to opposite sides thereof. An end cup or keeper plate 113 of the disc 106 is provided with an outer circumferential race surface 115. A bearing 114 is interposed between the input flange 102 and the race 115 to maintain concentricity between the input flange 102 and the output hub 104 while accommodating rotational movement of the input flange 102 upon the friction disc 106 when the torque applied to the clutch 100 exceeds a break-away level.

An annular pressure plate 116 is received over the output hub 104. A second friction disc 118 is splined to the output hub 104 as at 120 to allow for axial movement of the disc 118 upon the hub 104. As shown, the friction disc 118 may consist of two discs held back-to-back, or could comprise a single disc, but in either event with friction material provided on opposite surfaces thereof. A separator plate 122 may be interposed between the splined friction disc 118 and the fixed friction disc 106. Those skilled in the art will appreciate that the pressure plate 116 urges the friction discs 106,118 into frictional engagement with the separator plate 122 as well as the drive flange 102 and the pressure plate itself.

As shown, the separator plate 122 may be provided to extend the full diameter of the torque limiting clutch 100 and is preferably provided with a pair of shields of covers 124,126 positioned adjacent opposite planar surfaces thereof. It is also contemplated that the separator plate 122 may be eliminated, with the shields 124,126 serving the function thereof. The shields 124,126 are, as shown, generally cup-shaped, having outwardly extending flanges or side edges which respectively extend over the pressure plate 116 and the drive or input flange 102. The extensions of these cup-shaped covers shield the interior of the clutch assembly 100 from the environment, preventing the entry of contaminants or foreign particles which might adversely impact the operability of the device. When used in a corrosive environment, it is preferred that the shields 124,126 be of corrosion resistant construction. For purposes of heat dissipation, it is preferred that the optional separator plate 122 be of copper construction or other material of high thermal conductivity. It will be appreciated that the extension of the shields 124,126 to the exterior of the clutch 100 assists in dissipating heat generated from the frictional slippage.

The utilization of the shields 124,126 to protect against contamination is further assisted by the utilization of an "O" ring 128 which extends about the circumferential edge of the separator plate 122 at the point of departure of the shields 124,126 therefrom. In the preferred embodiment of the invention, the unextended diameter of the "O" ring 128 is slightly less than the diameter thereof when positioned to seal the interface between the shields 124,126 and the separator plate 122 as shown. Accordingly, the "O" ring is elastically held in place in contact with the circumferential edges of the covers 124,126.

As shown in Fig. 1 spring cup bolt assemblies 34 are interposed between the input flange 102 and the pressure plate 116 to urge the two together against the friction discs 106,118 and separator plate 122. As illustrated, the spring cup bolt assemblies 34 are received within and between the exposed exterior surfaces of the pressure plate 116 and input drive flange 102.

Each of the spring cup bolt assemblies 34 includes a cup or can 36 receiving and containing a spring 38 therein. A bolt 40 passes through an opening within an end cap 48 of the cup 36. At one end of the bolt 40 a washer 44 is maintained by a retaining ring 42. The washer 44 provides a precompressed moveable closure at an external end of the cup 36, engaging the spring 38 and compressing the same against the cap 48 in a manner understood by those skilled in the art to establish a pretested color verified spring force characteristic of the cup assembly 34. While the bolt 40 is substantially of a cylindrical nature, it will be appreciated that a shoulder 134 is provided thereon abutting the end cap 48 of the cup 36 prior to installation and at wear-out. The bolt 40 further has a threaded head 50 adapted to receive a flange nut 52 within a counter bore 54 of the pressure plate 116 at assembly. Openings 132 are of substantially the same geometry as the cross sectional geometry of the shoulder 134 are provided in the pressure plate 116. With this geometry being non-circular, and preferably hexagonal, the shoulder 134 mates with the opening 132 with such opening precluding any rotational movement of the bolt 40.

The cup 36 is provided with a ring flange 60 which is received within a circumferential groove (not shown) about the bore of the input flange 102 provided for receiving the cup assembly 34. The recessed groove assures that the spring cup bolt assembly 34 does not extend beyond the axially exterior planar surface of the input flange 102. In assembling the clutch spring cup bolt assembly 34 is inserted into the appropriate bore or bores spaced about the peripheral outer edge of the input flange 102. At this point, the spring 38 is precompressed an amount determined by the spring extension allowed by the position of the washer 44 when the shoulder 134 abuts the cap 48. The shoulder 134 is passed through the corresponding opening 132 such that the threaded head 50 is then present within the counterbore 54 of the pressure plate 116. The flange nut 52 is then threaded onto the threaded head 50 of the bolt 40 until it bottoms against the bottom of the bore 54 and the top edge of the shoulder 134. This tightening process draws the pressure plate 116 and input flange 102 towards each other and provides for additional compression of the spring 38 within the can 36. While the nut 52 is being tightened, the bolt 40 is restrained from any rotational movement by virtue of the mating engagement of the shoulder 134 with the corresponding opening 132. The spring 38 is further compressed between the cap 48 and the washer 44 as the nut 52 is tightened. The tightening draws the shoulder 46 from the cap 48 a distance equal to the wear thickness of the wear surfaces of the clutch 100. As the clutch wears, the cap 48 will move toward the shoulder 46 and will abut each other when the clutch is fully worn.

It will be appreciated that holes 136 are provided through the separator plate 122 and shields 124,126 near the outer edges thereof to receive the spring cup bolt assemblies 34 as shown. This configuration allows the separator plate 122 to extend substantially the full diameter of the clutch 100 achieving the desired heat dissipation.

Torque pins 138 are also provided about the periphery of the clutch 10, being threadedly engaged to the drive flange 102 as shown. Torque pins 138 pass through holes 140 in the separator plate 122 and shields 124,126 rotationally secure the separator plate 122 and shields 124,126 to the drive flange 102 and pressure plate 116. The torque pins 138 are each provided with a hexagonal shoulder 142 for receiving a wrench or the like during assembly to facilitate the threaded engagement with the drive flange 102. The hex shoulder 142 is positioned to mate with a chamfered washer 144 to maximize clamping area and torque pin strength. For this purpose, the chamfer 130 of the washer 144 accommodates a radius 108 beneath the shoulder 142 of the torque pin 138.

As an important feature of the invention, the torque pin 138 is recessed within a bore passing through the pressure plate 116. When the clutch 100 is first assembled, the depth of the recess 146 is equivalent to the aggregate allowable wear of the friction surfaces of the discs 106,118. Accordingly, when the label 148 on the end of the torque pin 138 is flush with the external surface of the pressure plate 116, it is an indication that the friction surfaces of the friction discs 106,118 have been spent and that the clutch 100 must be rebuilt. In the preferred embodiment of the invention, the label 148 bears a message such as "Rebuild When Pin Protrudes" or the like. Similarly, the ends 110 of the bolts 40 may be color coded or otherwise marked to indicate characteristic spring cup bolt force.

As a further part of the invention, a seal ring 150 is received upon and about the output hub 104 in sealing contacting engagement with the pressure plate 116, as shown. A V-ring seal 152 is similarly received upon the output hub 104 and in engagement with the seal ring 150 to maintain it in sealing interengagement between the hub 104 and the pressure plate 116, accommodating any axial movement of the pressure plate 116 resulting from wear. In the preferred embodiment of the invention, the seal ring 150 is of plastic or other suitable material.

It will be appreciated that the interengagement of the fixed friction disc 106 and axially moveable friction disc 118 with the separator plate 122 and the inner surfaces of the pressure plate 116 and drive flange 102 establishes a characteristic break-away torque for the clutch 100. This torque is a function of the strength and number of spring cup bolt assemblies 34 urging the pressure plate 134 toward the input flange 102. When the break-away torque is exceeded, the drive flange 102, separator plate 122, and pressure plate 116 rotate with respect to the output hub 104, keeper plate 108, and friction discs 106,118. The bearing 114 accommodates the relative rotation between the input drive flange 102 and keeper plate 108, while the bolts 112 assure that axial alignment of the elements of the clutch 100 is maintained.

Thus it can be seen that the objects of the invention have been satisfied by the structure presented above. While in accordance with the patent statutes only the best mode and preferred embodiments of the invention have been presented and described in detail, it is to be understood that the invention is not limited thereto or thereby. Accordingly, for an appreciation of the true scope and breadth of the invention, reference should be made to the following claims.

## Claims

1. A torque limiting clutch (100) comprising:
an input flange (102);
an output hub (104);
a pressure plate (116) received upon said output hub;
a first friction disc (106) interposed between said pressure plate and said input flange;
a keeper plate (113) received by said hub, said keeper plate fixedly securing said first friction disc to said output hub; and characterized by
a torque pin (138) passing through said pressure plate and threadedly received by said input flange, a chamfered washer (144) being interposed between a shoulder (142) of said torque pin and said input flange.

2. The torque limiting clutch according to claim 1, further characterized in that said torque pin (138) has an arcuate surface (108) between said shoulder (142) and an axial body of said torque pin; said chamfered washer (144) having a chamfered surface (130) in juxtaposition to said arcuate surface (108).

3. The torque limiting clutch according to claim 1 or claim 2, further characterized in that said torque pin (138) is recessed (146) within said pressure plate (116) until said first friction disc is spent.

4. The torque limiting clutch according to any preceding claim, further characterized in that said torque pin (138) passes through (140) a separator plate (122) interposed between said first friction disc (106) and said pressure plate (116).

5. The torque limiting clutch according to claim 4, characterized in that the separator plate (122) extends to the full diameter of the clutch.

6. The torque limiting clutch according to any preceding claim, characterized in that said input flange (102) is received upon said keeper plate (113), a bearing (114) being interposed between said input flange (102) and said keeper plate (113), said input flange, keeper plate, and bearing being coaxial.

7. The torque limiting clutch according to any preceding claim, further characterized by spring biasing means (34) interposed between said input flange (102) and said pressure plate (116) for urging said pressure plate toward said input flange.

8. The torque limiting clutch according to claim 7, further characterized by said spring means (34) passing through said separator plate (122).

9. The torque limiting clutch according to any preceding claim, characterized in that first and second cup-shaped annular shields (124,126) are positioned adjacent each other and between said pressure plate (116) and first friction disc (106), said first cup-shaped annular shield (126) having side edges extending over said input flange and said second cup-shaped annular shield (124) having side edges extending over said pressure plate.

10. The torque limiting clutch according to claim 9, characterized in that a seal (128) is interposed between said first and second cup-shaped annular shields (124, 126) between said side edges thereof.

## Patentansprüche

1. Drehmoment begrenzende Kupplung (100), umfassend:
einen Eingangsflansch (102);
eine Ausgangsnabe (104);
eine Druckplatte (116), die von der Ausgangsnabe aufgenommen wird;
eine erste Reibscheibe (106) zwischen der Druckplatte und dem Eingangsflansch;
eine von der Nabe aufgenommene Halteplatte (113), die die erste Reibscheibe fest an der Ausgangsnabe festlegt; **gekennzeichnet durch**
einen Drehmomentzapfen (138), der die Druckplatte durchsetzt und in Gewindeeingriff mit dem Eingangsflansch steht, wobei zwischen einer Schulter (142) des Drehmomentzapfens und dem Eingangsflansch eine abgefaste Zwischenscheibe (144) angeordnet ist.

2. Kupplung nach Anspruch 1, **dadurch gekennzeichnet,** daß der Drehmomentzapfen (138) zwischen der Schulter (142) und einem axialen Körper des Drehmomentzapfens eine gekrümmte Oberfläche (104) aufweist, wobei die Zwischenscheibe (144) eine abgefaste Fläche (130) gegenüber der gekrümmten Fläche (108) aufweist.

3. Kupplung nach Anspruch 1 oder 2, **dadurch gekennzeichnet,** daß der Drehmomentzapfen (138) in der Druckplatte (116) so lange aufgenommen (146) ist, bis die erste Reibscheibe verbraucht ist.

4. Kupplung nach einem der vorhergehenden Ansprüche, **dadurch gekennzeichnet,** daß der Drehmomentzapfen (138) eine Trennplatte (122) durchsetzt (140), welche sich zwischen der ersten Reibscheibe (106) und der Druckplatte (116) befindet.

5. Kupplung nach Anspruch 4, **dadurch gekennzeichnet,** daß die Trennplatte (122) sich über den vollen Kupplungsdurchmesser erstreckt.

6. Kupplung nach einem der vorhergehenden Ansprüche, **dadurch gekennzeichnet,** daß der Eingangsflansch (102) auf der Halteplatte (113) aufgenommen ist, wobei sich zwischen dem Eingangsflansch (102) und der Halteplatte (113) ein Lager (114) befindet, wobei der Eingangsflansch, die Halteplatte und das Lager koaxial sind.

7. Kupplung nach einem der vorhergehenden Ansprüche, **gekennzeichnet durch** eine Federvorspanneinrichtung (34) zwischen dem Eingangsflansch (102) und der Druckplatte (116), um die Druckplatte in Richtung auf den Eingangsflansch zu drängen.

8. Kupplung nach Anspruch 7, **dadurch gekennzeichnet,** daß die Federeinrichtung (34) die Trennplatte (122) durchsetzt.

9. Kupplung nach einem der vorhergehenden Ansprüche, **dadurch gekennzeichnet,** daß einander benachbart und zwischen der Druckplatte (116) und der ersten Reibscheibe (106) eine erste und eine zweite becherförmige Ringabschirmung (124, 126) angeordnet sind, von denen die erste becherförmige Ringabschirmung (126) Seitenkanten aufweist, die sich über den Eingangsflansch hinweg erstrecken, und die zweite becherförmige Ringabschirmung (124) Seitenkanten aufweist, die sich über die Druckplatte hinweg erstrecken.

10. Kupplung nach Anspruch 9, **dadurch gekennzeichnet,** daß sich zwischen der ersten und der zweiten becherförmigen Ringabschirmung (124, 126) zwischen deren Seitenkanten eine Dichtung (128) befindet.

## Revendications

1. Embrayage à limitation de couple (100) comprenant :
une bride d'entrée (102);
un moyeu de sortie (104);
une plaque de pression (116) montée sur ledit moyeu de sortie;
un premier disque de friction (106) intercalé entre ladite plaque de pression et ladite bride d'entrée;
une plaque de retenue (113) montée sur ledit moyeu, ladite plaque de retenue fixant fermement ledit disque de friction sur ledit moyeu de sortie; et
caractérisé par
une broche de transmission de couple (138) traversant ladite plaque de pression et logée par vissage dans ladite bride d'entrée, une rondelle chanfreinée (144) étant intercalée entre un épaulement (142) de ladite broche de transmission de couple et ladite bride d'entrée.

2. Embrayage à limitation de couple selon la revendication 1, caractérisé en outre en ce que ladite broche de transmission de couple (138) possède une surface courbe (108) entre ledit épaulement (142) et un corps axial de ladite broche de transmission de couple; ladite rondelle chanfreinée (144) possédant une surface chanfreinée (130) juxtaposée à ladite surface courbe (108).

3. Embrayage à limitation de couple selon la revendication 1 ou 2, caractérisé en outre en ce que ladite broche de transmission de couple (138) est disposée en renfoncement (146) à l'intérieur de ladite plaque de pression (116) jusqu'à ce que le premier disque de friction soit éliminé par usure.

4. Embrayage de limitation de couple selon l'une quelconque des revendications précédentes, caractérisé en outre en ce que ladite broche de transmission de couple (138) traverse (140) une plaque formant séparateur (122) intercalée entre ledit premier disque de friction (106) et ladite plaque de pression (116).

5. Embrayage à limitation de couple selon la revendication 4, caractérisé en ce que la plaque formant séparateur (122) s'étend sur le diamètre complet de l'embrayage.

6. Embrayage à limitation de couple selon l'une quelconque des revendications précédentes, caractérisé en ce que ladite bride d'entrée (102) est montée sur ladite plaque de retenue (113), un palier (114) étant intercalé entre ladite bride d'entrée (102) et ladite plaque de retenue (113), ladite bride d'entrée, ladite plaque de retenue et ledit palier étant coaxiaux.

7. Embrayage à limitation de couple selon l'une quelconque des revendications précédentes, caractérisé en outre par des moyens de sollicitation à ressort (34) intercalés entre ladite bride d'entrée (102) et ladite plaque de pression (116) pour repousser ladite plaque de pression vers ladite bride d'entrée.

8. Embrayage à limitation de couple selon la revendication 7, caractérisé en outre en ce que lesdits moyens à ressort (34) traversent ladite plaque formant séparateur (122).

9. Embrayage à limitation de couple selon l'une quelconque des revendications précédentes, caractérisé en ce que des premier et second blindages annulaires en forme de pots (124,126) sont disposés au voisinage l'un de l'autre et entre ladite plaque de pression (116) et le premier disque de friction (106), ledit premier blindage annulaire en forme de pot (126) possédant des bords latéraux s'étendant au-dessus de ladite bride d'entrée et ledit second blindage annulaire en forme de pot (124) comportant des bords latéraux s'étendant au-dessus de ladite plaque de pression.

10. Embrayage à limitation de couple selon la revendication 9, caractérisé en ce qu'un joint d'étanchéité (128) est intercalé entre lesdits premier et second blindages annulaires en forme de pots (124,126), entre lesdits bords latéraux de ces blindages.
